(19) Europäisches Patentamt / European Patent Office / Office européen des brevets

(11) **EP 3 719 177 B1**

(12) **EUROPEAN PATENT SPECIFICATION**

(45) Date of publication and mention
of the grant of the patent:
**27.12.2023   Bulletin 2023/52**

(21) Application number: **19211326.4**

(22) Date of filing: **25.11.2019**

(51) International Patent Classification (IPC):
*C25B 15/02* (2021.01)       *C25B 15/08* (2006.01)
*C25B 1/04* (2021.01)        *C25B 9/23* (2021.01)
*C25B 9/73* (2006.01)        *C25B 9/77* (2021.01)
*A62C 3/08* (2006.01)        *A62C 99/00* (2010.01)
*H01M 8/0267* (2016.01)      *A62B 7/14* (2006.01)

(52) Cooperative Patent Classification (CPC):
**C25B 15/02; C25B 1/04; C25B 9/23; C25B 9/73;
C25B 9/77; C25B 15/08;** A62B 7/14; A62C 3/08;
A62C 99/0018; H01M 8/0267; Y02E 60/36;
Y02E 60/50

(54) **THERMALLY-MANAGED ELECTROCHEMICAL INERT GAS GENERATING SYSTEM AND METHOD**

THERMISCH VERWALTETES ELEKTROCHEMISCHES INERTGASERZEUGUNGSSYSTEM UND VERFAHREN

SYSTÈME ET PROCÉDÉ DE GÉNÉRATION DE GAZ INERTE ÉLECTROCHIMIQUE À GESTION THERMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **04.04.2019   US 201916375629**

(43) Date of publication of application:
**07.10.2020   Bulletin 2020/41**

(73) Proprietor: **Hamilton Sundstrand Corporation
Charlotte, NC 28217-4578 (US)**

(72) Inventor: **RHEAUME, Jonathan
West Hartford, CT Connecticut 06119 (US)**

(74) Representative: **Dehns
St. Bride's House
10 Salisbury Square
London EC4Y 8JD (GB)**

(56) References cited:
**US-A1- 2005 115 825      US-A1- 2014 242 476
US-A1- 2016 315 333      US-A1- 2017 082 696
US-A1- 2017 167 037**

EP 3 719 177 B1

## Description

BACKGROUND

The subject matter disclosed herein generally relates to systems for generating and providing inert gas to protected spaces and optionally also providing oxygen and/or power. More specifically, the subject matter relates to thermal management of such systems.

It is recognized that fuel vapors within fuel tanks become combustible or explosive in the presence of oxygen. An inerting system decreases the probability of combustion or explosion of flammable materials in a fuel tank by maintaining a chemically non-reactive or inerting gas, such as nitrogen-enriched air, in the fuel tank vapor space, also known as ullage. Three elements are required to initiate combustion or an explosion: an ignition source (e.g., heat), fuel, and oxygen. The oxidation of fuel may be prevented by reducing any one of these three elements. If the presence of an ignition source cannot be prevented within a fuel tank, then the tank may be made inert by: 1) reducing the oxygen concentration, 2) reducing the fuel concentration of the ullage to below the lower explosive limit (LEL), or 3) increasing the fuel concentration to above the upper explosive limit (UEL). Many systems reduce the risk of oxidation of fuel by reducing the oxygen concentration by introducing an inerting gas such as nitrogen-enriched air (NEA) (i.e., oxygen-depleted air or ODA) to the ullage, thereby displacing oxygen with a mixture of nitrogen and oxygen at target thresholds for avoiding explosion or combustion.

It is known in the art to equip facilities or vehicles (e.g., aircraft, military vehicles, etc.) with onboard inerting gas generating systems, which supply nitrogen-enriched air to the vapor space (i.e., ullage) within the fuel tank. The nitrogen-enriched air has a substantially reduced oxygen content that reduces or eliminates oxidizing conditions within the fuel tank. Onboard inerting gas generating systems typically use membrane-based gas separators. Such separators contain a membrane that is permeable to oxygen and water molecules, but relatively impermeable to nitrogen molecules. A pressure differential across the membrane causes oxygen molecules from air on one side of the membrane to pass through the membrane, which forms oxygen-enriched air (OEA) on the low-pressure side of the membrane and nitrogen-enriched air (NEA) on the high-pressure side of the membrane. The requirement for a pressure differential necessitates a source of compressed or pressurized air. Another type of gas separator is based on an electrochemical cell such as a proton exchange membrane (PEM) electrochemical cell, which produces NEA by electrochemically generating protons for combination with oxygen to deplete air of combustible oxygen.

BRIEF DESCRIPTION

A system is disclosed for providing inerting gas to a protected space. The system includes an electrochemical cell comprising a cathode and an anode separated by a separator comprising a proton transfer medium. A cathode fluid flow path in operative fluid communication with the cathode between a cathode fluid flow path inlet and a cathode fluid flow path outlet. An anode fluid flow path is in operative fluid communication with the anode between an anode fluid flow path inlet and an anode fluid flow path outlet. A cathode supply fluid flow path is between an air source and the cathode fluid flow path inlet, and an inerting gas flow path in operative fluid communication with the cathode fluid flow path outlet and the protected space. An anode supply fluid flow path is between a process water source and the anode fluid flow path inlet. Thermal management of the system includes a heat transfer fluid flow path in operative thermal communication with the cathode or with the anode or with both the cathode and the anode, and in fluid isolation from the cathode and anode fluid flow paths; and a heat transfer fluid flowing on the thermal management fluid flow path.

In some aspects the system can further comprise a heat exchanger in operative thermal and fluid communication with heat transfer fluid on the heat transfer fluid flow path.

In any one or combination of the foregoing aspects, the heat exchanger includes a heat rejection side in operative fluid communication with the heat transfer fluid flow path, and a heat absorption side in operative thermal communication with a heat sink.

In any one or combination of the foregoing aspects, the heat exchanger includes a heat absorption side in operative fluid communication with the heat transfer fluid flow path, and a heat rejection side in operative thermal communication with a heat source.

In any one or combination of the foregoing aspects, the heat transfer fluid flow path includes a conduit disposed on the cathode fluid flow path or the anode fluid flow path.

In any one or combination of the foregoing aspects, the system can include a plurality of said electrochemical cells in a stack separated by electrically-conductive gas flow separators.

In any one or combination of the foregoing aspects, the heat transfer fluid flow path includes an internal passage through one or more of the electrically-conductive gas flow separators.

In any one or combination of the foregoing aspects, the system can further comprise: a temperature sensor in operative thermal communication with the cathode or the anode, or with both the cathode and the anode; a flow control device arranged to control a flow of the heat transfer fluid on the heat transfer fluid flow path; and a controller configured to provide a target temperature of the temperature sensor through control of a flow rate of the heat transfer fluid.

In any one or combination of the foregoing aspects, the temperature sensor is in operative fluid communication with the heat transfer fluid, which is in operative thermal communication with the cathode and/or the anode.

In any one or combination of the foregoing aspects, the system can further comprise: a temperature sensor in operative thermal communication with the cathode or the anode, or with both the cathode and the anode; a heat exchanger in operative thermal and fluid communication with heat transfer fluid on the heat transfer fluid flow path; and a controller configured to provide a target temperature of the temperature sensor through control of a temperature of the heat transfer fluid.

In any one or combination of the foregoing aspects, the system can further comprise: a temperature sensor in operative thermal communication with the cathode or the anode, or with both the cathode and the anode; a flow control device arranged to control a flow of the heat transfer fluid on the heat transfer fluid flow path; a heat exchanger in operative thermal and fluid communication with heat transfer fluid on the heat transfer fluid flow path; and a controller configured to provide a target temperature of the temperature sensor through control of a flow rate of the heat transfer, or through control of a temperature of the heat transfer fluid, or through control of a flow rate and a temperature of the heat transfer fluid.

Also disclosed is a method of inerting a protected space. According to the method, process water is delivered to an anode of an electrochemical cell comprising the anode and a cathode separated by a separator comprising a proton transfer medium. Air is delivered to the cathode and oxygen is reduced at the cathode to generate oxygen-depleted air. The oxygen-depleted air is directed from the cathode of the electrochemical cell along an inerting gas flow path to the protected space. Heat is transferred between a heat transfer fluid in fluid isolation from the process water and the electrochemical cell.

In some aspects of the method, heat is transferred from the electrochemical cell to the heat transfer fluid.

In any one or combination of the foregoing aspects, heat is transferred from the heat transfer fluid to the electrochemical cell.

In any one or combination of the foregoing aspects, the method can further include controlling a temperature of the heat transfer fluid.

In any one or combination of the foregoing aspects, the method can further include controlling a flow rate of the heat transfer fluid.

In any one or combination of the foregoing aspects, the method can further include controlling a temperature and a flow rate of the heat transfer fluid.

In any one or combination of the foregoing aspects, the method can further include transferring heat between the heat transfer fluid and a heat sink or a heat source.

In any one or combination of the foregoing aspects, heat can be transferred in a heat exchanger comprising a first fluid flow path comprising the heat transfer fluid and a second fluid flow path in operative fluid and thermal communication with the heat sink or heat source, wherein the method further comprises controlling fluid flow on the second fluid flow path.

BRIEF DESCRIPTION OF THE DRAWINGS

The following descriptions should not be considered limiting in any way. With reference to the accompanying drawings, like elements are numbered alike:

FIG. 1A is a schematic illustration of an aircraft that can incorporate various embodiments of the present disclosure;

FIG. 1B is a schematic illustration of a bay section of the aircraft of FIG. 1A;

FIG. 2 is a schematic illustration an example embodiment of an electrochemical cell;

FIG. 3 is a schematic illustration of an example embodiment of an electrochemical inert gas generating system;

FIG. 4 is a schematic illustration of an example embodiment of an electrochemical inert gas generating system with thermal management; and

FIG. 5 is a schematic illustration of an example embodiment of another electrochemical inert gas generating system with thermal management.

DETAILED DESCRIPTION

A detailed description of one or more embodiments of the disclosed apparatus and method are presented herein by way of exemplification and not limitation with reference to the Figures.

Although shown and described above and below with respect to an aircraft, embodiments of the present disclosure are applicable to on-board systems for any type of vehicle or for on-site installation in fixed systems. For example, military vehicles, heavy machinery vehicles, sea craft, ships, submarines, etc., may benefit from implementation of embodiments of the present disclosure. For example, aircraft and other vehicles having fire suppression systems, emergency power systems, and other systems that may electrochemical systems as described herein may include the redundant systems described herein. As such, the present disclosure is not limited to application to aircraft, but rather aircraft are illustrated and described as example and explanatory embodiments for implementation of embodiments of the present disclosure.

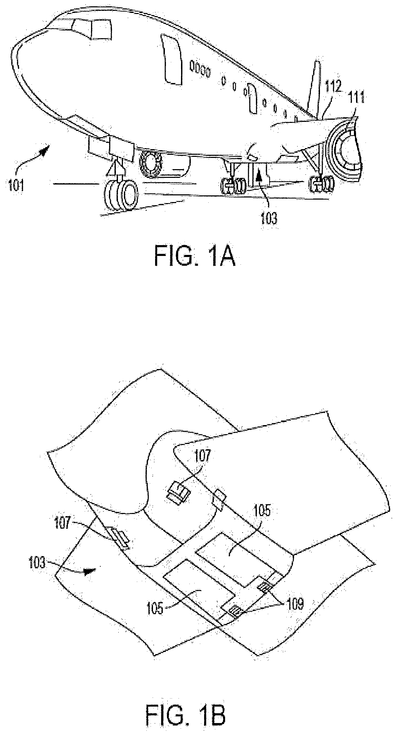

As shown in FIGS. 1A-1B, an aircraft includes an aircraft body 101, which can include one or more bays 103 beneath a center wing box. The bay 103 can contain and/or support one or more components of the aircraft 101. For example, in some configurations, the aircraft can include environmental control systems (ECS) and/or on-board inerting gas generation systems (OBIGGS) within the bay 103. As shown in FIG. 1B, the bay 103 includes bay doors 105 that enable installation and access to one or more components (e.g., OBIGGS, ECS, etc.). During operation of environmental control systems and/or fuel inerting systems of the aircraft, air that is external to the aircraft can flow into one or more ram air inlets 107. The outside air may then be directed to various system components (e.g., environmental conditioning system (ECS) heat exchangers) within the aircraft. Some air may be exhausted through one or more ram air exhaust outlets 109.

Also shown in FIG. 1A, the aircraft includes one or more engines 111. The engines 111 are typically mounted on the wings 112 of the aircraft and are connected to fuel tanks (not shown) in the wings, but may be located at other locations depending on the specific aircraft configuration. In some aircraft configurations, air can be bled from the engines 111 and supplied to OBIGGS, ECS, and/or other systems, as will be appreciated by those of skill in the art.

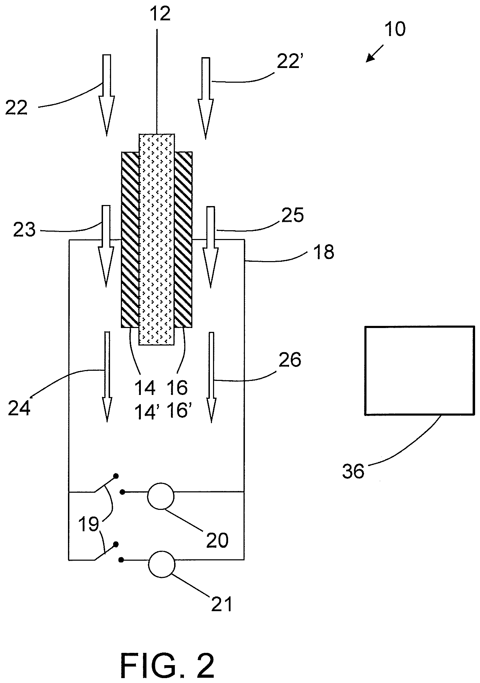

Referring now to FIG. 2, an electrochemical cell is schematically depicted. The electrochemical cell 10 comprises a separator 12 that includes an ion transfer medium. As shown in FIG. 2, the separator 12 has a cathode 14 disposed on one side and an anode 16 disposed on the other side. Cathode 14 and anode 16 can be fabricated from catalytic materials suitable for performing the needed electrochemical reaction (e.g., the oxygen-reduction reaction at the cathode and an oxidation reaction at the anode). Exemplary catalytic materials include, but are not limited to, nickel, platinum, palladium, rhodium, carbon, gold, tantalum, titanium, tungsten, ruthenium, iridium, osmium, zirconium, alloys thereof, and the like, as well as combinations of the foregoing materials. Cathode 14 and anode 16, including catalyst 14' and catalyst 16', are positioned adjacent to, and preferably in contact with the separator 12 and can be porous metal layers deposited (e.g., by vapor deposition) onto the separator 12, or can have structures comprising discrete catalytic particles adsorbed onto a porous substrate that is attached to the separator 12. Alternatively, the catalyst particles can be deposited on high surface area powder materials (e.g., graphite or porous carbons or metal-oxide particles) and then these supported catalysts may be deposited directly onto the separator 12 or onto a porous substrate that is attached to the separator 12. Adhesion of the catalytic particles onto a substrate may be by any method including, but not limited to, spraying, dipping, painting, imbibing, vapor depositing, combinations of the foregoing methods, and the like. Alternately, the catalytic particles may be deposited directly onto opposing sides of the separator 12. In either case, the cathode and anode layers 14 and 16 may also include a binder material, such as a polymer, especially one that also acts as an ionic conductor such as anion-conducting ionomers. In some embodiments, the cathode and anode layers 14 and 16 can be cast from an "ink," which is a suspension of supported (or unsupported) catalyst, binder (e.g., ionomer), and a solvent that can be in a solution (e.g., in water or a mixture of alcohol(s) and water) using printing processes such as screen printing or ink jet printing.

The cathode 14 and anode 16 can be controllably electrically connected by electrical circuit 18 to a controllable electric power system 20, which can include a power source (e.g., DC power rectified from AC power produced by a generator powered by a gas turbine engine used for propulsion or by an auxiliary power unit) and optionally a power sink 21. In some embodiments, the electric power system 20 can optionally include a connection to the electric power sink 21 (e.g., one or more electricity-consuming systems or components onboard the vehicle) with appropriate switching (e.g., switches 19), power conditioning, or power bus(es) for such on-board electricity-consuming systems or components, for optional operation in an alternative fuel cell mode.

With continued reference to FIG. 2, a cathode supply fluid flow path 22 directs gas from an air source (not shown) into contact with the cathode 14. Oxygen is electrochemically depleted from air along the cathode fluid flow path 23, and can be exhausted to the atmosphere or discharged as nitrogen-enriched air (NEA) (i.e., oxygen-depleted air, ODA) to an inerting gas flow path 24 for delivery to an on-board fuel tank (not shown), or to a vehicle fire suppression system associated with an enclosed space (not shown), or controllably to either or both of a vehicle fuel tank or an on-board fire suppression system. An anode fluid flow path 25 is configured to controllably receive an anode supply fluid from an anode supply fluid flow path 22'. The anode fluid flow path 25 includes water when the electrochemical cell is operated in an electrolyzer mode to produce protons at the anode for proton transfer across the separator 12 (e.g., a proton transfer medium such as a proton exchange membrane (PEM) electrolyte or phosphoric acid electrolyte). If the system is configured for alternative operation in a fuel cell mode, the anode fluid flow path 25 can be configured to controllably also receive fuel (e.g., hydrogen). The protons formed at the anode are transported across the separator 12 to the cathode 14, leaving oxygen on the anode fluid flow path, which is exhausted through an anode exhaust 26. Control of fluid flow along these flow paths can be provided through conduits and valves (not shown), which can be controlled by a controller 36. The controller can include a microprocessor that is programmed with instructions for sending signals to carry out control of any of the operations described herein.

Exemplary materials from which the electrochemical proton transfer medium can be fabricated include proton-conducting ionomers and ion-exchange resins. Ion-exchange resins useful as proton conducting materials include hydrocarbon- and fluorocarbon-type resins. Fluorocarbon-type resins typically exhibit excellent resistance to oxidation by halogen, strong acids, and bases. One family of fluorocarbon-type resins having sulfonic acid group functionality is NAFION™ resins (commercially available from E. I. du Pont de Nemours and Company, Wilmington, Del.). Alternatively, instead of an ion-exchange membrane, the separator 12 can be comprised of a liquid electrolyte, such as sulfuric or phosphoric acid, which may preferentially be absorbed in a porous-solid matrix material such as a layer of silicon carbide or a polymer than can absorb the liquid electrolyte, such as poly(benzoxazole). These types of alternative "membrane electrolytes" are well known and have been used in other electrochemical cells, such as phosphoric-acid fuel cells.

During operation of a proton transfer electrochemical cell in the electrolyzer mode, water at the anode undergoes an electrolysis reaction according to the formulae:

$$H_2O \rightarrow \frac{1}{2}O_2 + 2H^+ + 2e^- \qquad (1)$$

The electrons produced by this reaction are drawn from electrical circuit 18 powered by electric power source 20 connecting the positively charged anode 16 with the cathode 14. The hydrogen ions (i.e., protons) produced by this reaction migrate across the separator 12, where they react at the cathode 14 with oxygen in the cathode flow path 23 to produce water according to the formula

$$\frac{1}{2}O_2 + 2H^+ + 2e^- \rightarrow H_2O \qquad (2)$$

Removal of oxygen from cathode flow path 23 produces nitrogen-enriched air exiting the region of the cathode 14. The oxygen evolved at the anode 16 by the reaction of formula (1) is discharged as anode exhaust 26.

During operation of a proton transfer electrochemical cell in a fuel cell mode, fuel (e.g., hydrogen) at the anode undergoes an electrochemical oxidation according to the formula

$$H_2 \rightarrow 2H^+ + 2e^- \qquad (3)$$

The electrons produced by this reaction flow through electrical circuit 18 to provide electric power to the electric power sink 21. The hydrogen ions (i.e., protons) produced by this reaction migrate across the separator 12, where they react at the cathode 14 with oxygen in the cathode flow path 23 to produce water according to the formula (2).

$$\frac{1}{2}O_2 + 2H^+ + 2e^- \rightarrow H_2O \qquad (2)$$

Removal of oxygen from cathode flow path 23 produces nitrogen-enriched air exiting the region of the cathode 14.

As mentioned above, the electrolysis reaction occurring at the positively charged anode 16 requires water, and the ionic polymers used for a PEM electrolyte perform more effectively in the presence of water. Accordingly, in some embodiments, a PEM membrane electrolyte is saturated with water or water vapor. Although the reactions (1) and (2) are stoichiometrically balanced with respect to water so that there is no net consumption of water, in practice some amount of moisture will be removed through the cathode exhaust 24 and/or the anode exhaust 26 (either entrained or evaporated into the exiting gas streams). Accordingly, in some exemplary embodiments, water from a water source is circulated past the anode 16 along an anode fluid flow path (and optionally also past the cathode 14). Such water circulation can also provide cooling for the electrochemical cells. In some exemplary embodiments, water can be provided at the anode from humidity in air along an anode fluid flow path in fluid communication with the anode. In other embodiments, the water produced at cathode 14 can be captured and recycled to anode 16 (e.g., through a water circulation loop, not shown). It should also be noted that, although the embodiments are contemplated where a single electrochemical cell is employed, in practice multiple electrochemical cells will be electrically connected in series with fluid flow to the multiple cathode and anode flow paths routed through manifold assemblies.

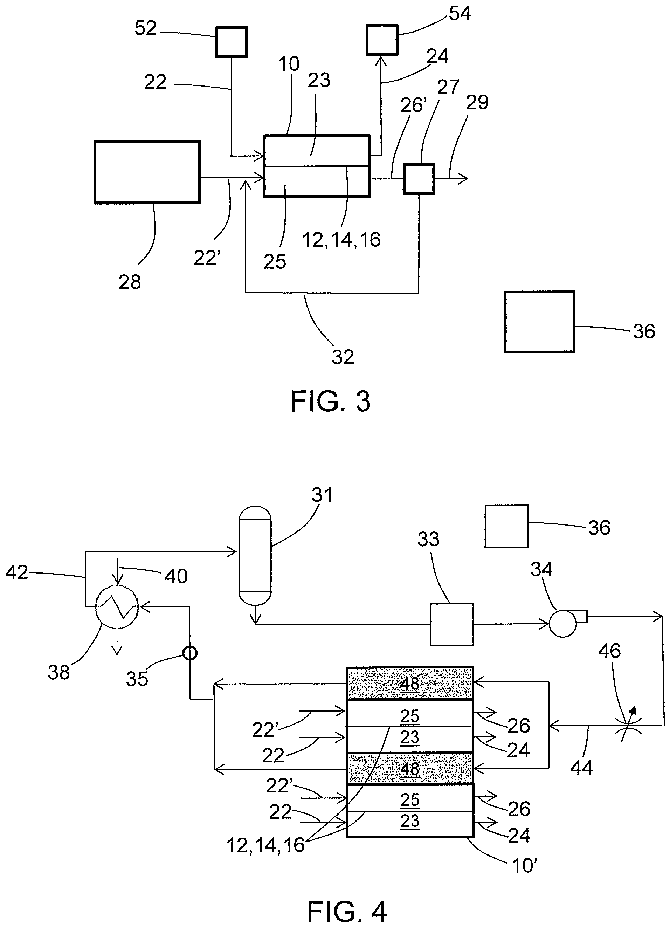

An example embodiment of an inerting system that can be used as an on-board aircraft inerting system with an electrochemical cell 10 (or cell stack) is schematically shown in FIG. 3. As shown in FIG. 3, water from a process water source 28 is directed (e.g., by a pump, not shown) along the anode supply fluid flow path 22' to the anode fluid flow path 25, where it is electrolyzed at the anode 16 to form protons, and oxygen. The protons are transported across the separator 12 to the cathode 14, where they combine with electrons from an external circuit (18, FIG. 2) and oxygen from airflow along the cathode fluid flow path 23 to form water. Removal of the protons from the anode fluid flow path 25 leaves oxygen gas on the anode fluid flow path, which is discharged as anode exhaust 26 to an anode discharge fluid flow path 26'. As further shown in FIG. 3, the fluid flow path 26' includes a gas-liquid separator 27. Although water is consumed at the anode by electrolysis, the fluid exiting as anode exhaust 26 can include gaseous oxygen and water vapor, which is separated as a gas stream 29 that can be exhausted to atmosphere or can be used for other applications such as an oxygen stream directed to aircraft occupant areas, occupant breathing devices, an oxygen storage tank, or an emergency aircraft oxygen breathing system. The gas-liquid separator 27 can include a tank with a liquid space and a vapor space inside, allowing for liquid water to be removed from the liquid space and transported back to the electrochemical cell 10 through water return conduit 32. Additional gas-liquid separators can be used such as a coalescing filter, vortex gas-liquid separator, or membrane separator.

As further shown in FIG. 3, the electrochemical cell 10 (or cell stack) generates an inerting gas on the cathode fluid flow path 23 by depleting combustible oxygen from an air flow to produce oxygen-depleted air (ODA), also known as nitrogen-enriched air (NEA) at the cathode 14, which can be directed to a protected space 54 (e.g., a fuel tank ullage space, a fire suppression system, a cargo hold, an equipment bay). As shown in FIG. 3, an air source 52 (e.g., ram air, compressor bleed, blower) is directed to the cathode fluid flow path 23 where oxygen is depleted by reaction with protons that have crossed the separator 12 to form water at the cathode 14. The ODA thereby produced can be directed to the protected space 54. The inerting gas flow path (cathode exhaust 24) can include additional components (not shown) such as flow control valve(s), a pressure regulator or other pressure control device, and water removal device(s) such as a heat exchanger condenser, a membrane drier or other water removal device(s), or a filter or other particulate or contaminant removal devices. Additional information regarding the electrochemical production of ODA can be found in U.S. Patent 9,963,792, US Patent Application Publication No. 2017/0331131A1, and US Patent Application Serial No. 16/029,024.

In some embodiments, the electrochemical cell can be used in an alternate mode to provide electric power for on-board power-consuming systems, as disclosed in the aforementioned US Patent Application Publication No. 2017/0331131A1. In this mode, fuel (e.g., hydrogen) is directed from a fuel source to the anode 16 where hydrogen molecules are split to form protons that are transported across the separator 12 to combine with oxygen at the cathode. Simultaneously, reduction and oxidation reactions exchange electrons at the electrodes, thereby producing electricity in an external circuit (18, 21 FIG. 2). Embodiments in which these alternate modes of operation can be utilized include, for example, operating the system in a first mode of water electrolysis (either continuously or at intervals) under normal aircraft operating conditions (e.g., in which an engine-mounted generator provides electrical power) and operating the system in a second mode of electrochemical electricity production in response to a demand for emergency electrical power (e.g., failure of an engine-mounted generator). ODA can be produced at the cathode 14 in each of these alternate modes of operation.

With reference now to FIG. 4, an example embodiment is shown of a gas inerting system utilizing an electrochemical cell stack 10' (including seals, end plates, and other hardware as known to the skilled person) and a thermal management system. For ease of illustration, the separators 12, cathodes 14, and anodes 16 are simplified as individual membrane electrode assemblies (MEA) 15. It is noted that FIG. 4 shows counterflow between the anode and cathode sides of the MEA 15 and that FIG. 3 shows co-flow; however, many configurations can utilize cross-flow configurations that for ease of illustration are not shown in the Figures herein. As shown in FIG. 4, a stack 10' of electrochemical cells with electrically-conductive fluid flow separators (i.e., bipolar plates) 48 between adjacent electrochemical cells is depicted. The stack 10' in FIG. 4 is shown with two electrochemical cells, but typical stacks will contain a greater number of cells. As shown in FIG. 4, the cathode side of the electrochemical cell stack 10' produces ODA on the cathode fluid flow path 23 as inerting gas for a protected space in the same manner as discussed above with respect to FIG. 3. The anode side of the stack 10' receives water from the anode supply fluid flow path 22' for electrolysis at the anode 16, and discharges oxygen and any non-electrolyzed water at the fluid flow path 26. A water source, gas/liquid separator, and water return conduit can be present as shown in FIG. 3, but for ease of illustration are not shown in FIG. 4.

A thermal management system is in thermal communication with the anode 16 or with the cathode 14 or with both the anode 16 and the cathode 14, but is in fluid isolation from the cathode fluid flow path 23 and the anode fluid flow path 25 as discussed in more detail below. The thermal management system includes a heat transfer fluid disposed on a heat transfer fluid flow path, also described in further detail below. The heat transfer fluid can be any of a number of fluids, including but not limited to water and other aqueous fluids, as well as polar and non-polar organic fluids. In some embodiments, the heat transfer fluid can be in liquid form, but can also be in gaseous form as well as including gas or liquid form such as in a vapor compression heat transfer loop. Examples of heat transfer fluids include but are not limited to glycols such as ethylene glycol or propylene glycol, alcohols such as methanol or ethanol, water and aqueous solutions such as heat transfer brines, and other organic fluids such as propane, butane, and substituted hydrocarbons (e.g., fluoro-substituted) and other organic compounds such as 2,2,3,3-tetrafluoropropene or 1,1,1,2-tetrafluoroethane.

As further shown in FIG. 4, a heat transfer fluid on a thermal control flow path 44 flows from a heat transfer fluid reservoir 31 flows through an optional heater 33 to pump 34. The pump 34 provides a motive force to move the heat transfer fluid through a control valve 46, and then through passages disposed within the electrically-conductive gas flow separators (e.g., hollow bipolar plates) 48. The location of the pump 34 shown in FIG. 4 is representative of one example embodiment, and the pump 34 can be at other locations in the system, e.g., on an outlet side of the stack 10'. The heat transfer fluid output from the hollow bipolar plates 48 is routed through an optional heat exchanger 38 and back to the reservoir 31. The heat exchanger 38 can provide cooling from a heat sink along a flow path 40 (e.g., RAM air, a refrigerant from a cooling system such as a vapor compression cooling system). The heater 33 can be in thermal communication with any type of heat source such as electric heating coils or can be a heat exchanger in fluid/thermal communication with a heat source (e.g., hot engine compressor bleed air destined for an on-board ECS). Multiple heat exchangers can also be used for either heating or cooling (or alternatively, the heat exchangers 33 and 38 can be combined into a single module), and can be disposed anywhere along the heat transfer fluid flow loop. Heat transfer fluid exiting from the heat exchanger 38 is then returned to the reservoir 31 along the flow path 42.

In some embodiments, the controller 36 can be programmed to control either the flow rate of heat transfer fluid or the temperature of the heat transfer fluid along the heat transfer fluid flow path through the electrochemical cell 10. The control of flow and/or temperature of the heat transfer fluid can provide a technical effect of removing a target amount of heat generated by the electrochemical cell. The enthalpy of the chemical reactions resulting from electrolytic generation of inerting gas occurring on the anode and cathode sides of the electrochemical cell are balanced, with water molecules being split on the anode side and atoms combined to form water on the cathode side. Similarly, the quantity of oxygen generated at the anodes equals the quantity of oxygen reduced at the cathodes. Accordingly, the electrical energy entered into the system results in generation of heat since no net change in chemical species occurs. At the same time, there are competing factors regarding a target temperature, with higher temperatures desired to promote electrolysis of water on the anode side and the reduction of oxygen on the cathode side, and lower temperatures favored on the cathode side to discourage water vapor from departing the cathodes with the inerting gas that is directed to a fuel tank ullage space where water vapor is not desired. Accordingly, achieving an optimum target temperature in the electrochemical cell through thermal management can be beneficial.

Flow rate of the heat transfer fluid through the electrochemical cell can be regulated by controlling the speed of the pump 34 or with the control valve 46. Control of process water temperature based on output from a temperature sensor along the thermal control flow path 44 as shown for sensor 35 (and/or along the anode fluid flow path 25, and/or along the cathode fluid flow path 23) can be accomplished, for example, by controlling the flow of heat transfer fluid through the heat exchanger 38 (e.g., by controlling the speed of the pump 34 or by diverting a controllable portion of the output flow of the pump 34 through a bypass around the heat exchanger 38 with control valves (not shown)) or by controlling the flow of a heat absorption fluid (e.g., RAM air or fan-blown air) through the heat exchanger 38 along the flow path represented by 40.

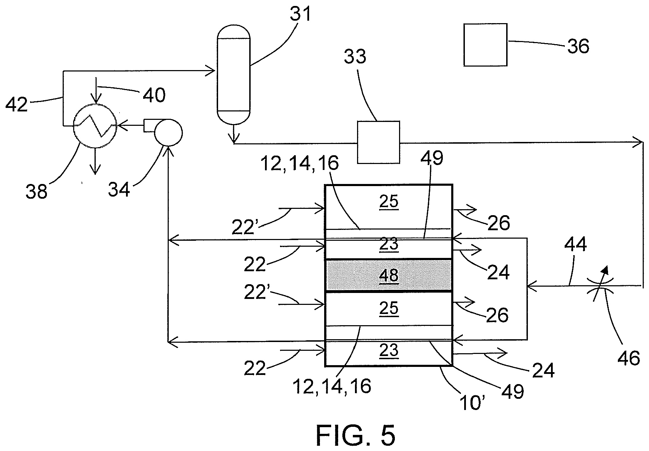

Of course, routing of the heat transfer fluid through passages in the bipolar plates is one example embodiment of a thermal control flow path isolated from the cathode and anode fluid flow paths 23/25, and thermal control can be implemented with other example embodiments. One such example embodiment is shown in FIG. 5. As shown in FIG. 5, heat transfer fluid is routed through conduits 49 disposed along the cathode fluid flow paths 23 to provide thermal management. It should be noted that, although not shown in FIG. 5, conduits 49 can be disposed on the anode fluid flow paths 25 in addition to or as an alternative to on the cathode fluid flow paths 23.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an", "the", or "any" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

It is intended that the present disclosure not be limited to the particular embodiment disclosed as the best mode contemplated for carrying out this present disclosure, but that the present disclosure will include all embodiments falling within the scope of the claims.

## Claims

1. A system for providing inerting gas to a protected space, comprising

an electrochemical cell (10) comprising a cathode (14) and an anode (16) separated by a separator (12) comprising a proton transfer medium;
a cathode fluid flow path (23) in operative fluid communication with the cathode between a cathode fluid flow path inlet and a cathode fluid flow path outlet;
an anode fluid flow path (25) in operative fluid communication with the anode between an anode fluid flow path inlet and an anode fluid flow path outlet;
a cathode supply fluid flow path between an air source and the cathode fluid flow path inlet, and an inerting gas flow path in operative fluid communication with the cathode fluid flow path outlet and the protected space;
an anode supply fluid flow path between a process water source and the anode fluid flow path inlet; and
thermal management components comprising:

a heat transfer fluid flow path in operative thermal communication with the cathode (14) or with the anode (16) or with both the cathode (14) and the anode (16), and in fluid isolation from the cathode and anode fluid flow paths; and

a heat transfer fluid flowing on the heat transfer fluid flow path.

2. The system of claim 1, further comprising a heat exchanger (38) in operative thermal and fluid communication with heat transfer fluid on the heat transfer fluid flow path.

3. The system of claim 2, wherein the heat exchanger (38) includes a heat rejection side in operative fluid communication with the heat transfer fluid flow path, and a heat absorption side in operative thermal communication with a heat sink; and/or wherein the heat exchanger (38) includes a heat absorption side in operative fluid communication with the heat transfer fluid flow path, and a heat rejection side in operative thermal communication with a heat source.

4. The system of any preceding claim, wherein the heat transfer fluid flow path includes a conduit disposed on the cathode fluid flow path (23) or the anode fluid flow path (25).

5. The system of any preceding claim, comprising a plurality of said electrochemical cells in a stack separated by electrically-conductive gas flow separators, and preferably wherein the heat transfer fluid flow path includes an internal passage through one or more of the electrically-conductive gas flow separators.

6. The system of any preceding claim, further comprising:

   a temperature sensor in operative thermal communication with the cathode or the anode, or with both the cathode and the anode;
   a flow control device arranged to control a flow of the heat transfer fluid on the heat transfer fluid flow path; and
   a controller (36) configured to provide a target temperature of the temperature sensor through control of a flow rate of the heat transfer fluid, and preferably wherein the temperature sensor is in operative fluid communication with the heat transfer fluid, which is in operative thermal communication with the cathode and/or the anode.

7. The system of claim 1, further comprising:

   a temperature sensor in operative thermal communication with the cathode or the anode, or with both the cathode and the anode;
   a heat exchanger (38) in operative thermal and fluid communication with heat transfer fluid on the heat transfer fluid flow path; and
   a controller (36) configured to provide a target temperature of the temperature sensor through control of a temperature of the heat transfer fluid.

8. The system of claim 1, further comprising:

   a temperature sensor in operative thermal communication with the cathode or the anode, or with both the cathode and the anode;
   a flow control device arranged to control a flow of the heat transfer fluid on the heat transfer fluid flow path;
   a heat exchanger (38) in operative thermal and fluid communication with heat transfer fluid on the heat transfer fluid flow path; and
   a controller (36) configured to provide a target temperature of the temperature sensor through control of a flow rate of the heat transfer, or through control of a temperature of the heat transfer fluid, or through control of a flow rate and a temperature of the heat transfer fluid.

9. A method of inerting a protected space, comprising

   delivering process water to an anode of an electrochemical cell comprising the anode and a cathode separated by a separator comprising a proton transfer medium;
   delivering air to the cathode and reducing oxygen at the cathode to generate oxygen-depleted air;
   directing the oxygen-depleted air from the cathode of the electrochemical cell along an inerting gas flow path to the protected space; and
   transferring heat between a heat transfer fluid in fluid isolation from the process water and the electrochemical cell.

10. The method of claim 9, wherein heat is transferred from the electrochemical cell to the heat transfer fluid.

11. The method of claims 9 or 10, wherein heat is transferred from the heat transfer fluid to the electrochemical cell.

12. The method of any of claims 9-11, further comprising controlling a temperature of the heat transfer fluid.

13. The method of any of claims 9-12, further comprising controlling a flow rate of the heat transfer fluid.

14. The method of any of claims 9-13, further comprising controlling a temperature and a flow rate of the heat transfer fluid.

**15.** The method of any of claims 9-14, further comprising transferring heat between the heat transfer fluid and a heat sink or a heat source, and preferably wherein heat is transferred in a heat exchanger comprising a first fluid flow path comprising the heat transfer fluid and a second fluid flow path in operative fluid and thermal communication with the heat sink or heat source, wherein the method further comprises controlling fluid flow on the second fluid flow path.

**Patentansprüche**

**1.** System zum Bereitstellen von inertisierendem Gas für einen geschützten Raum, umfassend

eine elektrochemische Zelle (10), die eine Kathode (14) und eine Anode (16) umfasst, die durch einen Separator (12) getrennt sind, der ein Protonenübertragungsmedium umfasst; einen Kathodenfluidströmungsweg (23) in operativer Fluidkommunikation mit der Kathode zwischen einem Kathodenfluidströmungswegeinlass und einem Kathodenfluidströmungswegauslass; einen Anodenfluidströmungsweg (25) in operativer Fluidkommunikation mit der Anode zwischen einem Anodenfluidströmungswegeinlass und einem Anodenfluidströmungswegauslass; einen Kathodenversorgungsfluidströmungsweg zwischen einer Luftquelle und dem Kathodenfluidströmungswegeinlass und einen Strömungsweg des inertisierenden Gases in operativer Fluidkommunikation mit dem Kathodenfluidströmungswegauslass und dem geschützten Raum; einen Anodenversorgungsfluidströmungsweg zwischen einer Prozess-wasserquelle und dem Anodenfluidströmungswegeinlass; und Komponenten zur thermischen Verwaltung, umfassend:

einen Wärmeübertragungsfluidströmungsweg in operativer thermischer Kommunikation mit der Kathode (14) oder mit der Anode (16) oder sowohl mit der Kathode (14) als auch mit der Anode (16) und in Fluidisolation von dem Kathoden- und Anodenfluidströmungsweg; und ein Wärmeübertragungsfluid, das auf dem Wärmeübertragungsfluidströmungsweg strömt.

**2.** System nach Anspruch 1, ferner umfassend einen Wärmetauscher (38) in operativer thermischer Kommunikation und Fluidkommunikation mit Wärmeübertragungsfluid auf dem Wärmeübertragungsfluidströmungsweg.

**3.** System nach Anspruch 2, wobei der Wärmetauscher (38) eine Wärmeabgabeseite in operativer Fluidkommunikation mit dem Wärmeübertragungsfluidströmungsweg und eine Wärmeabsorptionsseite in operativer thermischer Kommunikation mit einer Wärmesenke beinhaltet; und/oder wobei der Wärmetauscher (38) eine Wärmeabsorptionsseite in operativer Fluidkommunikation mit dem Wärmeübertragungsfluidströmungsweg und eine Wärmeabgabeseite in operativer thermischer Kommunikation mit einer Wärmequelle beinhaltet.

**4.** System nach einem der vorhergehenden Ansprüche, wobei der Wärmeübertragungsfluidströmungsweg eine Leitung beinhaltet, die auf dem Kathodenfluidströmungsweg (23) oder dem Anodenfluidströmungsweg (25) angeordnet ist.

**5.** System nach einem der vorhergehenden Ansprüche, umfassend eine Vielzahl der elektrochemischen Zellen in einem Stapel, die durch elektrisch leitfähige Gasströmungsseparatoren getrennt sind, und wobei der Wärmeübertragungsfluidströmungsweg vorzugsweise einen internen Durchlass durch einen oder mehrere der elektrisch leitfähigen Gasströmungsseparatoren beinhaltet.

**6.** System nach einem der vorhergehenden Ansprüche, ferner umfassend:

einen Temperatursensor in operativer thermischer Kommunikation mit der Kathode oder der Anode oder sowohl mit der Kathode als auch mit der Anode; eine Strömungssteuervorrichtung, die dazu angeordnet ist, eine Strömung des Wärmeübertragungsfluids auf dem Wärmeübertragungsfluidströmungsweg zu steuern; und eine Steuerung (36), die dazu konfiguriert ist, eine Solltemperatur des Temperatursensors durch Steuerung einer Strömungsgeschwindigkeit des Wärmeübertragungsfluids bereitzustellen, und wobei der Temperatursensor vorzugsweise in operativer Fluidkommunikation mit dem Wärmeübertragungsfluid steht, das in operativer thermischer Kommunikation mit der Kathode und/oder der Anode steht.

**7.** System nach Anspruch 1, ferner umfassend:

einen Temperatursensor in operativer thermischer Kommunikation mit der Kathode oder der Anode oder sowohl mit der Kathode als auch mit der Anode; einen Wärmetauscher (38) in operativer thermischer Kommunikation und Fluidkommunikation mit Wärmeübertragungsfluid auf dem Wärmeübertragungsfluidströmungsweg; und

eine Steuerung (36), die dazu konfiguriert ist, eine Solltemperatur des Temperatursensors durch Steuerung einer Temperatur des Wärmeübertragungsfluids bereitzustellen.

8. System nach Anspruch 1, ferner umfassend:

einen Temperatursensor in operativer thermischer Kommunikation mit der Kathode oder der Anode oder sowohl mit der Kathode als auch mit der Anode;
eine Strömungssteuervorrichtung, die dazu angeordnet ist, eine Strömung des Wärmeübertragungsfluids auf dem Wärmeübertragungsfluidströmungsweg zu steuern;
einen Wärmetauscher (38) in operativer thermischer Kommunikation und Fluidkommunikation mit Wärmeübertragungsfluid auf dem Wärmeübertragungsfluidströmungsweg; und
eine Steuerung (36), die dazu konfiguriert ist, eine Solltemperatur des Temperatursensors durch Steuerung einer Strömungsgeschwindigkeit des Wärmeübertragungsfluids oder durch Steuerung einer Temperatur des Wärmeübertragungsfluids oder durch Steuerung einer Strömungsgeschwindigkeit und einer Temperatur des Wärmeübertragungsfluids bereitzustellen.

9. Verfahren zum Inertisieren eines geschützten Raums, umfassend Zuführen von Prozesswasser zu einer Anode einer elektrochemischen Zelle, die die Anode und eine Kathode umfasst, die durch einen Separator getrennt sind, der ein Protonenübertragungsmedium umfasst;

Zuführen von Luft zu der Kathode und Reduzieren von Sauerstoff an der Kathode, um an Sauerstoff verarmte Luft zu erzeugen; Leiten der an Sauerstoff verarmten Luft von der Kathode der elektrochemischen Zelle entlang eines Strömungswegs von inertisierendem Gas zu dem geschützten Raum; und
Übertragen von Wärme zwischen einem Wärmeübertragungsfluid in Fluidisolation von dem Prozesswasser und der elektrochemischen Zelle.

10. Verfahren nach Anspruch 9, wobei Wärme von der elektrochemischen Zelle auf das Wärmeübertragungsfluid übertragen wird.

11. Verfahren nach Anspruch 9 oder 10, wobei Wärme von dem Wärmeübertragungsfluid auf die elektrochemische Zelle übertragen wird.

12. Verfahren nach einem der Ansprüche 9-11, ferner umfassend Steuern einer Temperatur des Wärmeübertragungsfluids.

13. Verfahren nach einem der Ansprüche 9-12, ferner umfassend Steuern einer Strömungsgeschwindigkeit des Wärmeübertragungsfluids.

14. Verfahren nach einem der Ansprüche 9-13, ferner umfassend Steuern einer Temperatur und einer Strömungsgeschwindigkeit des Wärmeübertragungsfluids.

15. Verfahren nach einem der Ansprüche 9-14, ferner umfassend Übertragen von Wärme zwischen dem Wärmeübertragungsfluid und einer Wärmesenke oder einer Wärmequelle, und wobei Wärme vorzugsweise in einem Wärmetauscher übertragen wird, der einen ersten Fluidströmungsweg, der das Wärmeübertragungsfluid umfasst, und einen zweiten Fluidströmungsweg in operativer Fluidkommunikation und thermischer Kommunikation mit der Wärmesenke oder Wärmequelle umfasst, wobei das Verfahren ferner Steuern der Fluidströmung auf dem zweiten Fluidströmungsweg umfasst.

**Revendications**

1. Système de fourniture d'un gaz d'inertage à un espace protégé, comprenant

une cellule électrochimique (10) comprenant une cathode (14) et une anode (16) séparées par un séparateur (12) comprenant un milieu de transfert de protons ;
un trajet d'écoulement de fluide de cathode (23) en communication fluidique fonctionnelle avec la cathode entre une entrée de trajet d'écoulement de fluide de cathode et une sortie de trajet d'écoulement de fluide de cathode ;
un trajet d'écoulement de fluide d'anode (25) en communication fluidique fonctionnelle avec l'anode entre une entrée de trajet d'écoulement de fluide d'anode et une sortie de trajet d'écoulement de fluide d'anode ;
un trajet d'écoulement de fluide d'alimentation de cathode entre une source d'air et l'entrée de trajet d'écoulement de fluide de cathode, et un trajet d'écoulement de gaz d'inertage en communication fluidique fonctionnelle avec la sortie de trajet d'écoulement de fluide de cathode et l'espace protégé ;
un trajet d'écoulement de fluide d'alimentation d'anode entre une source d'eau de traitement et l'entrée de trajet d'écoulement de fluide d'anode ; et
des composants de gestion thermique comprenant :

un trajet d'écoulement de fluide caloporteur en communication thermique fonctionnelle avec la cathode (14) ou avec l'anode (16) ou à la fois avec la cathode (14) et l'anode (16), et en isolation fluidique par rapport aux trajets d'écoulement de fluide de cathode et d'anode ; et

un fluide caloporteur s'écoulant sur le trajet d'écoulement de fluide caloporteur.

2. Système selon la revendication 1, comprenant également un échangeur de chaleur (38) en communication thermique et fluidique fonctionnelle avec un fluide caloporteur sur le trajet d'écoulement de fluide caloporteur.

3. Système selon la revendication 2, dans lequel l'échangeur de chaleur (38) comprend un côté rejet de chaleur en communication fluidique fonctionnelle avec le trajet d'écoulement de fluide caloporteur, et un côté absorption de chaleur en communication thermique fonctionnelle avec un dissipateur thermique ; et/ou dans lequel l'échangeur de chaleur (38) comprend un côté absorption de chaleur en communication fluidique fonctionnelle avec le trajet d'écoulement de fluide caloporteur, et un côté rejet de chaleur en communication thermique fonctionnelle avec une source de chaleur.

4. Système selon une quelconque revendication précédente, dans lequel le trajet d'écoulement de fluide caloporteur comprend un conduit disposé sur le trajet d'écoulement de fluide de cathode (23) ou sur le trajet d'écoulement de fluide d'anode (25).

5. Système selon une quelconque revendication précédente, comprenant une pluralité desdites cellules électrochimiques dans un empilement séparées par des séparateurs d'écoulement de gaz électriquement conducteurs, et de préférence dans lequel le trajet d'écoulement de fluide caloporteur comprend un passage interne à travers l'un ou plusieurs des séparateurs d'écoulement de gaz électriquement conducteurs.

6. Système selon une quelconque revendication précédente, comprenant également :

   un capteur de température en communication thermique fonctionnelle avec la cathode ou l'anode, ou à la fois avec la cathode et l'anode ; un dispositif de régulation d'écoulement conçu pour réguler un écoulement du fluide caloporteur sur le trajet d'écoulement de fluide caloporteur ; et un contrôleur (36) configuré pour fournir une température cible du capteur de température par régulation d'un débit du fluide caloporteur, et de préférence dans lequel le capteur de température est en communication fluidique fonctionnelle avec le fluide caloporteur, qui est en communication thermique fonctionnelle avec la cathode et/ou l'anode.

7. Système selon la revendication 1, comprenant également :

   un capteur de température en communication thermique fonctionnelle avec la cathode ou l'anode, ou à la fois avec la cathode et l'anode ; un échangeur de chaleur (38) en communication thermique et fluidique fonctionnelle avec le fluide caloporteur sur le trajet d'écoulement de fluide caloporteur ; et un contrôleur (36) configuré pour fournir une température cible du capteur de température par régulation d'une température du fluide caloporteur.

8. Système selon la revendication 1, comprenant également :

   un capteur de température en communication thermique fonctionnelle avec la cathode ou l'anode, ou à la fois avec la cathode et l'anode ; un dispositif de régulation d'écoulement conçu pour réguler un écoulement du fluide caloporteur sur le trajet d'écoulement de fluide caloporteur ; un échangeur de chaleur (38) en communication thermique et fluidique fonctionnelle avec le fluide caloporteur sur le trajet d'écoulement de fluide caloporteur ; et un contrôleur (36) configuré pour fournir une température cible du capteur de température par régulation d'un débit du transfert de chaleur, ou par régulation d'une température du fluide caloporteur, ou par régulation d'un débit et d'une température du fluide caloporteur.

9. Procédé d'inertage d'un espace protégé, comprenant

   la fourniture d'eau de traitement à une anode d'une cellule électrochimique comprenant l'anode et une cathode séparées par un séparateur comprenant un milieu de transfert de protons ; la fourniture d'air à la cathode et la réduction d'oxygène au niveau de la cathode pour générer de l'air appauvri en oxygène ; l'orientation de l'air appauvri en oxygène depuis la cathode de la cellule électrochimique le long d'un trajet d'écoulement de gaz d'inertage vers l'espace protégé ; et le transfert de chaleur entre un fluide caloporteur en isolation fluidique de l'eau de traitement et la cellule électrochimique.

**10.** Procédé selon la revendication 9, dans lequel de la chaleur est transférée de la cellule électrochimique au fluide caloporteur.

**11.** Procédé selon les revendications 9 ou 10, dans lequel de la chaleur est transférée du fluide caloporteur à la cellule électrochimique.

**12.** Procédé selon l'une quelconque des revendications 9 à 11, comprenant également la régulation d'une température du fluide caloporteur.

**13.** Procédé selon l'une quelconque des revendications 9 à 12, comprenant également la régulation d'un débit du fluide caloporteur.

**14.** Procédé selon l'une quelconque des revendications 9 à 13, comprenant également la régulation d'une température et d'un débit du fluide caloporteur.

**15.** Procédé selon l'une quelconque des revendications 9 à 14, comprenant également le transfert de chaleur entre le fluide caloporteur et un dissipateur thermique ou une source de chaleur, et de préférence dans lequel de la chaleur est transférée dans un échangeur de chaleur comprenant un premier trajet d'écoulement de fluide comprenant le fluide caloporteur et un second trajet d'écoulement de fluide en communication fluidique et thermique fonctionnelle avec le dissipateur thermique ou la source de chaleur, dans lequel le procédé comprend également la régulation de l'écoulement de fluide sur le second trajet d'écoulement de fluide.

FIG. 1A

FIG. 1B

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9963792 B
- US 20170331131 A1
- US 029024